# EUROPEAN PATENT SPECIFICATION

(11) **EP 4 114 742 B1**
(45) Date of publication and mention of the grant of the patent: **20.03.2024**
(21) Application number: 21708396.3
(22) Date of filing: 01.03.2021
(51) Int. Cl.: B65B 1/02, B26D 1/06, B26D 5/02, B26D 5/08, B26D 7/01, B26F 1/12, B29C 65/78, B65B 43/02, B65B 51/22, B65B 51/14, B65B 55/02, B65B 61/00, B65B 61/18, B65D 17/28, B23K 20/10, B23K 20/233, B65B 29/00, B29C 65/80, B29C 65/00, B29C 65/18, B29L 31/00

(54) **MACHINE FOR FORMING BAGS WITH INFUSION OR EXTRACTION PRODUCTS**
MASCHINE ZUM BILDEN VON BEUTELN MIT AUFGUSS- ODER EXTRAKTIONSPRODUKTEN
MACHINE POUR FORMER DES SACHETS CONTENANT DES PRODUITS À INFUSER OU À EXTRAIRE

(30) Priority: 02.03.2020 IT 202000004321
(43) Date of publication of application: 11.01.2023
(73) Proprietor: I.M.A. Industria Macchine Automatiche S.p.A., 40064 Ozzano dell'Emilia (BO) (IT)
(72) Inventor: PETRILLO, Marco, 40064 Ozzano Dell'Emilia (Bologna) (IT); RIVOLA, Sauro, 40064 Ozzano Dell'Emilia (Bologna) (IT); BIANCHI, Mauro, 40055 Castenaso (Bologna) (IT)
(74) Representative: Milli, Simone
(86) International application number: PCT/IB2021/051674
(87) International publication number: WO 2021/176321

(56) References cited:
- EP-A1- 1 384 664
- EP-B1- 1 384 664
- WO-A1-2012/117308
- WO-A1-2016/071160
- WO-A1-2017/175127
- US-A1- 2006 137 298
- US-A1- 2016 185 139

## Description

### Technical field

This invention relates to a machine for forming bags with infusion or extraction products.

### Background art

The type of bag according to the invention is obtained from a sheet of material obtained from metal films, such as, for example, aluminium, but the material which can be used may be different even though with features similar to metal films.

Individual powder or granular products, or composite mixtures of a main basic product and a secondary product such as, for example, an aromatising product, are inserted in this bag.

Each bag has a quadrangular shape and is closed by three seals, two lateral and one at the top, whilst the bottom is created by folding the sheet in a "U" shape and has a partly embedded shape.

These bags usually have a lateral line of weakness close to the top sealing to allow the pull-off opening of the bag.

Automatic machines are used in order to obtain this type of bag as illustrated partly also in patent document WO2012/117308 and comprising:
- a station for feeding a continuous strip of packaging material along a feed direction;
- a cutting station configured for separating single sheets from the continuous strip;
- a station for folding the single U-shaped sheet comprising a folding device and a first carousel, rotating about a first axis of rotation, equipped with radial grippers configured to each receive a corresponding sheet folded in a "U" shape and in such a way as to keep the closed bottom of the "U" of the individual sheet embedded towards the inside;
- a unit for sealing the two lateral edges of the sheet folded into a "U" shape; the sealing unit being positioned along the rotary path of the first carousel.

Some stations are added to this structure, in some machine solutions, such as:
- a second carousel, rotating about a second axis, equipped with a plurality of radial grippers configured to receive, each, the sheet folded in a "U" shape and sealed at the sides; the sheet is positioned on the corresponding gripper with its open end or mouth towards the outside of the gripper; the second carousel rotates about the second axis to define an arc-shaped path for each gripper so as to allow the reaching of a series of further stations in succession, that is to say:
- a station for dosing at least one infusion product fed through the open mouth of the U-shaped sheet comprising at least one dosing device;
- a station for closing, by sealing, the mouth of the sheet;
- a station for cutting excess material present between the sealing line and the free end of the sheet or bag thus formed using a cutting element;
- a station for collecting formed bags.

It should be noted that there may be two stations for sealing the sheet one after another. The first station performs an ultrasonic sealing using a unit comprising a sonotrode, whilst the second station performs a thermal sealing, superposed on the first sealing, in order to guarantee a secure closing line.

Moreover, at least the group of stations positioned close to the second carousel and the second carousel itself are arranged in a closed space and in a controlled atmosphere or environment (through the presence of nitrogen) to maintain a high level of the integrity of the product inserted in the sheets and in such a way as to increase the times for integrity of the bags themselves, since they will have a predetermined quantity of nitrogen inside them.

The cutting station, which is particularly relevant to the invention, comprises a cutting tool having a body for supporting two opposite heads defining a punch (provided with a blade) and a die shaped to match to allow separation of the excess material on the bag.

At least one of the two heads (usually the cutting punch) is articulated to the body in such a way as to rotate between a non-operating position, wherein a first head is in a position away from the second head, and an operating position for cutting wherein the first head is rotated and in contact with the second head with the interposing of the material to be separated from the rest of the sheet.

The supporting body is fixed and positioned radially relative to the second axis of rotation of the second carousel in such a way as to position the two heads (in an operating position) partly inside the outer edge of the carousel (outer edge being defined by a virtual circular arc the radius of which is given by the sum of the length of each gripper and the length of the portion of sheet protruding from each gripper).

The heads are therefore interfering, in the operating position, during the passage of each gripper with the sheet closed to allow the sheet to be intercepted and to obtain the cutting of the excess material.

However, the cutting tool made up in this way has several drawbacks due in particular to the fixed structure of the supporting body and the position of the two operating heads.

The fixed structure of the body relative to the carousel and to the grippers is not very flexible, since if the dimensions of the bags are changed on the machine and therefore also the size of the waste material to be cut, it is necessary to act on the body in order to be able to modify its position relative to the position of the grippers passing, with relatively long setting times, in view of the presence of the controlled atmosphere in which the cut is positioned.

The positioning of the heads within the outer edge of the carousel forces the head(s) to have a very large angle of opening to allow the passage of the gripper with the bag before cutting.

It has been found that this large angle of opening of the heads makes it difficult for precise cuts to be made in the material of the sheet and, above all, uncertainty in the total separation of the waste material from the sheet. In this situation, the waste material might remain partly connected to the sheet (thus creating a hypothetical waste) or might remain positioned on one of the cutting heads and then cause problems for subsequent cutting. To this must be added the fact that any waste material cut incorrectly falls freely on the bottom of the machine and inside the zone with controlled atmosphere; this factor therefore requires machine stoppages for cleaning the operating zone.

### Aim of the invention

The aim of the invention is to provide a machine for forming bags with infusion or extraction products which overcomes the above-mentioned drawbacks of the prior art.

More specifically, the aim of this invention is to provide a machine for forming bags for infusion or extraction products which can increase the production quality of the bags and the productivity of the machine through greater flexibility of the cutting station.

A further aim of the invention is to provide a machine for forming bags with infusion or extraction products which is able to rationalise the collection of the waste material generated by the cutting station.

Said aims are fully achieved by the machine for forming bags with infusion or extraction products according to the invention, as characterised in the appended claims.

### Brief description of the drawings

These and other features of the invention will become more apparent from the following detailed description of a preferred, non-limiting embodiment of it, with reference to the accompanying drawings, in which:
- Figure 1 is a schematic front view, with some parts cut away to better illustrate others, of a machine for forming bags with infusion or extraction products according to the invention;
- Figure 2 is a perspective view, with some parts cut away to better illustrate others, of an enlarged detail of Figure 1, in particular a station for cutting bags positioned close to a carousel for moving bags;
- Figures 3 and 6 are schematic front views of a succession of positions which can be actuated by the cutting station of Figure 2;
- Figure 7 is a schematic front view of a bag obtained with the machine of the preceding drawings.

### Detailed description of preferred embodiments of the invention

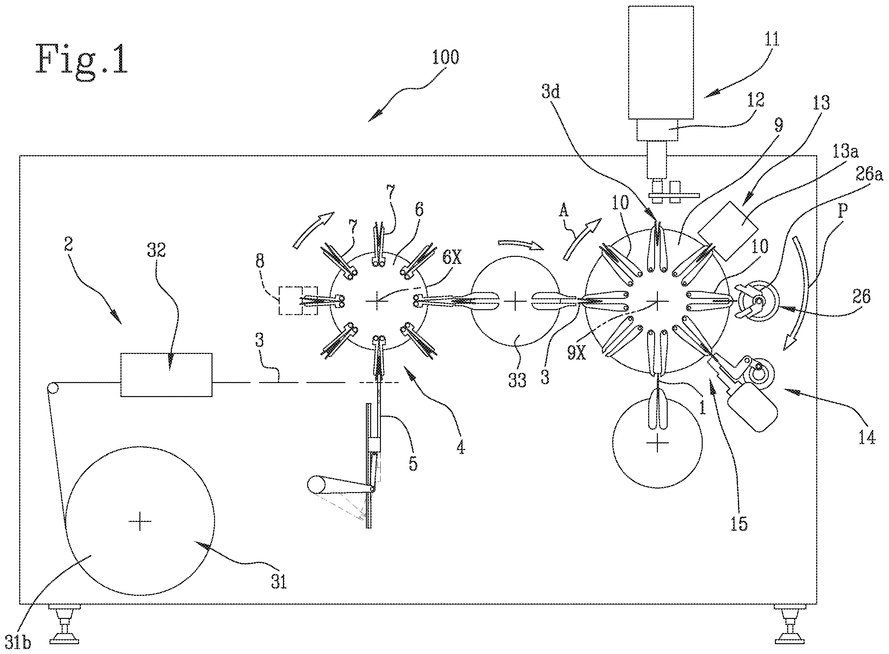

With reference to the accompanying drawings, and in particular with reference to Figure 1, the machine according to the invention, labelled 100 in its entirety, is used for forming bags 1 containing infusion or extraction products.

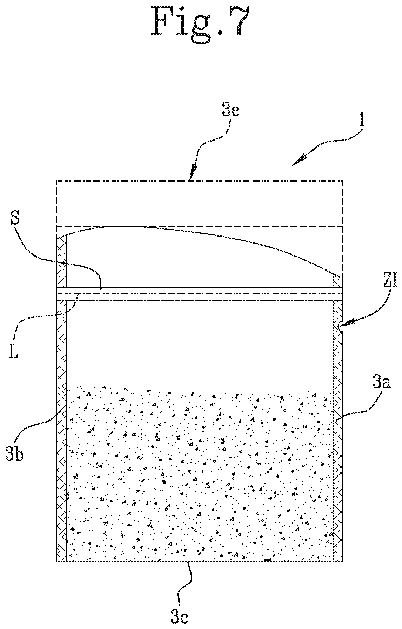

These bags 1 (for example, the one illustrated in Figure 7) are made, as described in more detail below, from single sheets of wrapping material obtained from metal films, such as, for example, aluminium, or from different material even if they have similar properties to metal films.

As illustrated, the machine 100 comprises a station 2 for forming and feeding single sheets 3 of wrapping material.

Again as illustrated, the machine 100 comprises a station 4 for U-shaped folding of the single sheet 3 comprising a folding device 5 and a first carousel 6, rotating about a first axis 6X of rotation.

The first carousel 6 is equipped with a plurality of radial grippers 7 configured to each receive a corresponding single sheet 3.

The machine 100 also comprises a unit 8 for sealing two lateral edges 3a and 3b of the single sheet 3, positioned in the corresponding gripper 7, in such a way as to form a sheet 3 with a closed bottom 3c for folding and the two closed sides 3a and 3b for sealing.

Again as illustrated, the machine 100 comprises a second carousel 9, rotating about a second axis 9X of rotation, equipped with a plurality of radial grippers 10 configured to each receive the individual sheet 3.

The single sheet 3 is positioned on the corresponding gripper 10 with one end or mouth 3d open towards the outside of the gripper 10.

As illustrated, the second carousel 9 rotates about the second axis 9X to define a circular path P for each gripper 10 so as to allow a series of further stations to be reached in succession and along a feed direction A. The stations reached by the grippers 10 are the following, along the feed direction A.

A dosing station 11 comprising at least one device 12 for dosing an infusion or extraction product fed through the open opening 3d of the single sheet 3.

A first station 13 for closing the opening 3d of the single sheet 3 protruding from the gripper 10, by means of a transversal sealing line L.

A station 14 for cutting an edge 3e of excess material present between the transversal sealing line L and the free end of the sheet 3 or bag 1 formed in this way using a cutting element 15 positioned radially relative to the second axis 9X of rotation of the second carousel 9.

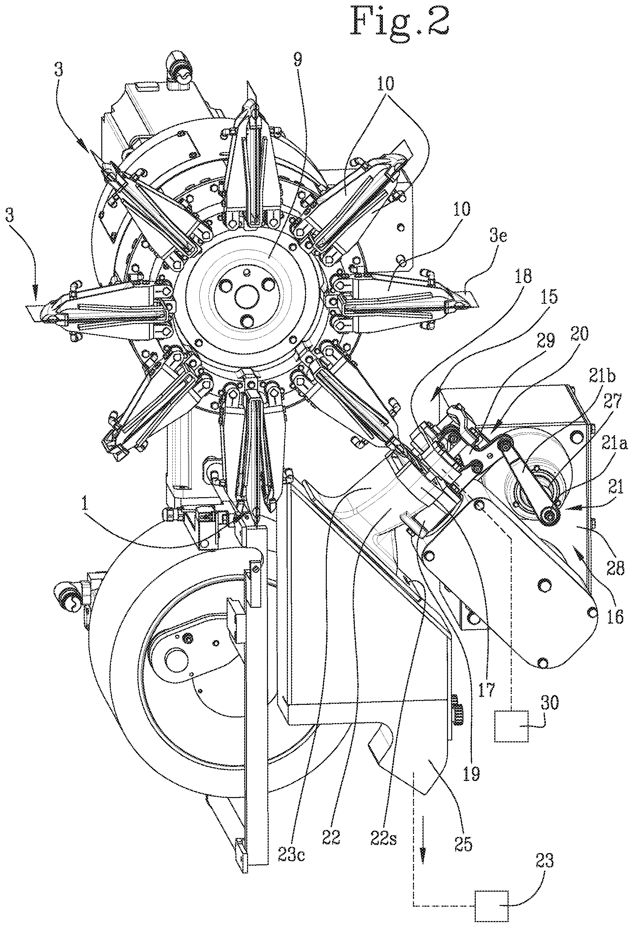

As illustrated (see also Figures 2 to 6) the cutting element 15 comprises a supporting body 16 for a first contact head or die 17 and a second cutting head or punch 18 positioned facing the die 17.

The cutting element 15 also comprises an actuator 19 interposed between the die 17 and the punch 18 and the supporting body 16.

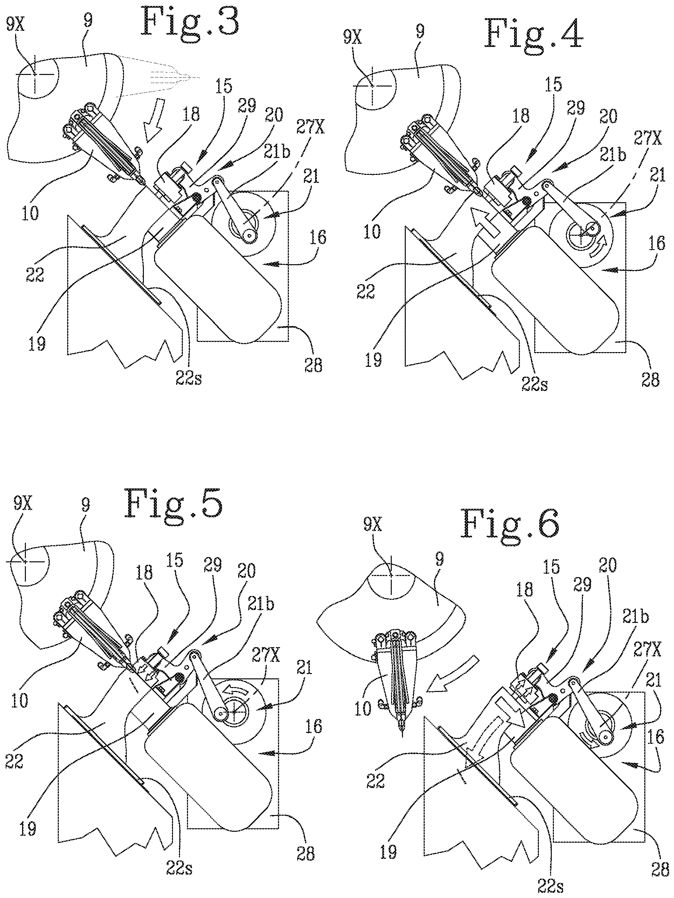

The actuator 19 is configured for moving, in both directions, the die 17 and the punch 18, relative to the supporting body 16, along a rectilinear and radial trajectory relative to the second axis 9X of rotation between a first withdrawn non-operating position, wherein the die 17 and the punch 18 are moved away from the edge 3e of material in excess of the bag 1 positioned at the cutting station 14 (Figures 3 and 6), and a second advanced operating position, wherein the die 17 and the punch 18 are brought close to each other and intercept the edge 3e of material in excess of the bag 1, so as to separate the edge 1 of material in excess (Figures 4 and 5).

The cutting element 15 also comprises a kinematic unit 20 connected to the die 17 or to the punch 18 and configured for moving them between a first open non-operating position, wherein the die 17 and the punch 18 are spaced apart (Figures 3, 4 and 6), at least at the first withdrawn non-operating position of the actuator 19, and a second closed operating position, wherein the die 17 and the punch 18 are in contact with each other, with interposed the excess edge 3e to be cut, at least at the second advanced operating position of the actuator 19.

In other words, the cutting unit is located, in a non-operating position, spaced from the path P followed by the grippers with the bag being formed on board. The element is activated and moves towards the bag only when the gripper is in front of the cutting element.

This axial translation operating mode allows the cutting element to be structured with a reduced movement of the die and punch towards and away from each other, since they are positioned in front of the gripper in such a way as to superpose the edge to be cut.

To this must be added the fact that the step of withdrawal of the die and punch after cutting the excess edge determines a secure complete detachment of the excess edge from the bag, thanks to its retaining inside the die and the punch.

Moreover, the presence of the actuator increases the flexibility of use of the cutting element, as the stroke of the die and punch towards each other can be modified according to the size of the bag, that is to say, the excess quantity of edge to be cut.

It should be noted that the station 2 for forming individual sheets 3 may comprise a station 31 for feeding a continuous strip of wrapping material (comprising a reel 31b) and a cutting station 32 configured for separating the individual sheets 3 from the continuous strip.

The above-mentioned unit 8 for sealing the sides 3a and 3b of the sheet 3 may be, in a first embodiment, along the path of the first carousel 6 and close to the first carousel 6 (see the dashed line block in Figure 1) or, in a second embodiment, again along the path of the first carousel 6, but inserted directly on the carousel 6.

The second embodiment of the sealing unit 8 may comprise one or more sealing units positioned on each of the plurality of radial grippers 7 present on the first rotary carousel 6. In this way, the transport times can also be used for sealing the sides 3a and 3b of each sheet 3 directly on each gripper 7.

Preferably, the machine 100 also comprises an intermediate carousel 33 for the passage of the individual sheets 3 from the first carousel 6 (after the lateral folding and sealing of the individual sheet 3) to the second carousel 9.

Preferably, the kinematic unit 20 is equipped with a unit 21 for transmitting motion connected to the supporting body 16 in such a way as to coordinate the movement of the die 17 or the punch 18 between the first open non-operating position and the second closed operating position, and vice versa, at the activation of the actuator 19 between the first withdrawn non-operating position and the second advanced operating position, and vice versa.

In light of this and without limiting the scope of the invention, the die 17 is fixed to a rigid support 22 and the punch 18 is connected to the kinematic unit 20 and is movable towards and away from the die 17.

Preferably, the above-mentioned motion drive unit 21 comprises a connecting rod-crank mechanism (see Figures 2 to 6).

The crank 21a is associated with a shaft 27, freely rotatable about its axis 27X, and connected to a column 28 forming part of the supporting body 16.

The connecting rod 21b is articulated to the crank 21a, at its first end, and to an L-shaped lever 29 defining the kinematic unit 20 for moving the punch 18 between the first open non-operating position and the second closed operating position through a rectilinear trajectory towards and away from the die 17.

More specifically, the L-shaped lever 29 is articulated at three different points: the first, upper, to lever 29, the second, lower, to the actuator 19, and the third, lateral, to the punch 18.

This configuration allows the punch 18, slidably constrained to a pair of fixed cylinders, to move towards and away from the fixed die 17. Preferably, the die 17 and/or the punch 18 are connected to a suction unit 23 for retaining the cut excess edge 3e.

The suction unit 23 can be activated at least at the passage of the actuator 19 between its first non-operating position and its second operating position.

In light of this, the die 17 has an open inner area connected to the suction unit 23 for collecting the cut excess edge 3e.

It should be noted that the suction unit 23 comprises a fixed support 22 to which the die 17 is associated and in which a suction channel 23c is made which extends from the open inner area of the die 17.

The support 22 comprises a lower slide base 22s slidable along a wall 24 forming part of a box-shaped collector 25 for picking up and unloading the cut excess edge 3e towards a collecting point (not illustrated).

The slide base 22s therefore adapts to the movement of the die 17, however keeping the connection with the box-shaped collector 25 at all times.

Preferably, the punch 18 is connected to a unit 30 for generating a flow of air passing through a plurality of through holes made on the punch 18 to allow the retaining of the cut excess edge 3e by the pushing of the cut excess edge 3e on the die 17.

The flow of air also allows the pushing of the excess edge 3e towards the discharge channel 23c.

Preferably, the die 17 and the punch 18 are also configured for removing a flap of material on one side 3a or 3b of the bag 1 (during the step for cutting the excess edge 3e) in such a way as to define a weakened zone ZI of the bag 1 to allow a tear-type opening (see Figure 7).

It should be noted that the die 17 and the punch 18 may have different cutting geometries depending on the type of bag 1 to be obtained.

Figure 7 illustrates a cutting configuration wherein the bag 1 is obtained with the slightly curved top, but it may be obtained with a rectilinear head parallel to the closing seal (illustrated with a dashed line).

Preferable, the machine 100 comprises a second closing station 26 interposed between the first closing station 13 and the cutting station 14. In light of this, the first closing station 13 comprises an ultrasonic sealing unit 13a to form the transversal closing line L of the individual sheet 3. The second closing station 26 comprises a hot thermal sealing unit 26a to form a transversal sealing strip S superposed on the transversal closing line L of the single sheet 3.

The machine structured in this way therefore achieves the preset aims thanks to the axially movable cutting station.

This cutting element solution offers a series of advantages:
- a reduction in the extent of opening and closing movement of the die and of the punch with a reduction in the operating times and greater cutting quality;
- greater safety in the removal of the excess edge, thanks to the backward movement of the actuator with die and punch still in the near operating position, combined with the air flow units;
- greater cleaning of the machine thanks to the suction channels which direct and discharge the excess cut edges towards zones outside the machine.

## Claims

1. A machine for forming bags (1) with infusion or extraction products comprising at least:
- a station (2) for forming and feeding single sheets (3) of wrapping material;
- a station (4) for U-shaped folding of the single sheet (3) comprising a folding device (5) and a first carousel (6), rotating about a first axis (6X) of rotation, equipped with a plurality of radial grippers (7) each configured to receive a corresponding single sheet (3);
- a unit (8) for sealing two lateral edges (3a, 3b) of the single sheet (3), positioned in the corresponding gripper (7), in such a way as to form a sheet (3) with a closed bottom (3c) for folding and the two closed sides (3a, 3b) for sealing;
**characterized in that** the machine further comprises:
- a second carousel (9), rotating about a second axis (9X) of rotation, equipped with a plurality of radial grippers (10) each configured to receive the single sheet (3); the single sheet (3) being positioned on the corresponding gripper (10) with a relative end or opening (3d) open towards the outside of the gripper (10); the second carousel (9) rotating about the second axis (9X) to define a circular path (P) for each gripper (10) so as to allow the reaching of a further series of stations in succession and according to a feed direction (A):
- a dosing station (11) comprising at least one device (12) for dosing an infusion or extraction product fed through the open opening (3d) of the single sheet (3);
- a first station (13) for closing the opening (3d) of the single sheet (3) protruding from the gripper (10), by means of a transversal sealing line (L);
- a station (14) for cutting an edge (3e) of excess material present between the transversal sealing line (L) and the free end of the sheet (3) or bag (1) formed in this way using a cutting element (15) positioned radially relative to the second axis (9X) of rotation of the second carousel (9); and
**characterized in that** the cutting element (15) comprises:
- a supporting body (16) for a first contact head or die (17) and a second cutting head or punch (18) positioned facing the die (17);
- an actuator (19) interposed between the die (17) and the punch (18) and the supporting body (16) and configured for moving the die (17) and the punch (18), relative to the supporting body (16), along a rectilinear and radial trajectory relative to the second axis (9X) of rotation, in both directions, between a first withdrawn non-operating position wherein the die (17) and the punch (18) are moved away from the edge (3e) of material in excess of the bag (1) positioned at the cutting station (14), and a second advanced operating position, wherein the die (17) and the punch (18) are brought close to each other and intercept the edge (3e) of material in excess of the bag (1), so as to separate the edge (1) of material in excess;
- a kinematic unit (20) connected to the die (17) or to the punch (18) and configured for moving them between a first open non-operating position, wherein the die (17) and the punch (18) are spaced apart, at least at the first withdrawn non-operating position of the actuator (19), and a second closed operating position, wherein the die (17) and the punch (18) are in contact with each other, with interposed the excess edge (3e) to be cut, at least at the second advanced operating position of the actuator (19).

2. The machine according to claim 1, wherein the kinematic unit (20) is equipped with a unit (21) for transmitting motion connected to the supporting body (16) in such a way as to coordinate the movement of the die (17) or the punch (18) between the first open non-operating position and the second closed operating position, and vice versa, at the activation of the actuator (19) between the first withdrawn non-operating position and the second advanced operating position, and vice versa.

3. The machine according to claim 1 or 2, wherein the die (17) is fixed to a rigid support (22) and the punch (18) is connected to the kinematic unit (20) and is movable towards and away from the die (17).

4. The machine according to any one of the preceding claims, wherein the die (17) and/or the punch (18) are connected to a suction unit (23) for retaining the cut excess edge (3e); the suction unit (23) being able to be activated at least at the passage of the actuator (19) between its first non-operating position and its second operating position.

5. The machine according to claim 4, wherein the die (17) has an open inner area connected to the suction unit (23) for collecting the cut excess edge (3e).

6. The machine according to claim 4 or 5, wherein the suction unit (23) comprises a fixed support (22) to which the die (17) is associated and in which there is a suction channel (23c) extending from the open inner area of the die (17); the support (22) comprising a lower slide base (22s) slidable along a wall (24) forming part of a box-shaped collector (25) for picking up and unloading the cut excess edge (3e) towards a collecting point.

7. The machine according to any one of the preceding claims, wherein the die (17) and the punch (18) are also configured for removing a flap of material on one side (3a or 3b) of the bag (1) in such a way as to define a weakened zone (ZI) of the bag (1) to allow a tear-type opening.

8. The machine according to any one of the preceding claims, comprising a second closing station (26) interposed between the first closing station (13) and the cutting station (14).

9. The machine according to claim 8, wherein the first closing station (13) comprises an ultrasonic sealing unit (13a) to form the transversal closing line (L) of the single sheet (3) and wherein the second closing station (26) comprises a hot thermal sealing unit (26a) to form a transversal sealing strip (S) superposed on the transversal closing line (L) of the single sheet (3).

10. The machine according to any one of claims 2 to 9, wherein the motion transmission unit (21) comprises a connecting rod-crank mechanism; the crank (21a) being associated with a shaft (27), freely rotatable about its axis (27X), and constrained to a column (28) forming part of the supporting body (16); the connecting rod (21b) being articulated to the crank (21a), at a relative first end, and to a L-shaped lever (29) defining the kinematic unit (20) for moving the punch (18) between the first open non-operating position and the second closed operating position through a rectilinear trajectory towards and away from the die (17).

11. The machine according to any one of the preceding claims, wherein the punch (18) is connected to a unit (30) for generating a flow of air passing through a plurality of through holes made on the punch (18) to allow the retaining of the cut excess edge (3e) by the pushing of the cut excess edge (3e) on the die (17).

## Patentansprüche

1. Maschine zum Bilden von Beuteln (1) mit Aufguss- oder Extraktionsprodukten, die mindestens Folgendes umfasst:
- eine Station (2) zum Bilden und Zuführen einzelner Folien (3) aus Umwicklungsmaterial;
- eine Station (4) für das U-förmige Falten der einzelnen Folie (3), umfassend eine Faltvorrichtung (5) und ein erstes Karussell (6), das sich um eine erste Rotationsachse (6X) dreht, das mit einer Vielzahl von radialen Greifern (7) ausgestattet ist, die jeweils ausgelegt sind, um eine entsprechende einzelne Folie (3) aufzunehmen;
- eine Einheit (8) zum Siegeln zweier Seitenkanten (3a, 3b) der einzelnen Folie (3), die im entsprechenden Greifer (7) positioniert ist, sodass eine Folie (3) mit einer geschlossenen Unterseite (3c) zum Falten und zwei geschlossenen Seiten (3a, 3b) zum Siegeln gebildet wird, **dadurch gekennzeichnet, dass** die Maschine Folgendes umfasst:
- ein zweites Karussell (9), das sich um eine zweite Rotationsachse (9X) dreht, das mit einer Vielzahl von radialen Greifern (10) ausgestattet ist, die jeweils ausgelegt sind, um die einzelne Folie (3) aufzunehmen, wobei die einzelne Folie (3) auf dem entsprechenden Greifer (10) so positioniert ist, dass sich ein relatives Ende oder eine relative Öffnung (3d) hinführend zur Außenseite des Greifers (10) öffnet, wobei sich das zweite Karussell (9) um die zweite Achse (9X) dreht, um einen kreisförmigen Weg (P) für einen jeden Greifer (10) zu definieren, sodass das Erreichen einer weiteren Reihe von Stationen nacheinander und gemäß einer Zuführungsrichtung (A) erlaubt wird;
- eine Dosierstation (11), umfassend mindestens eine Vorrichtung (12) zum Dosieren eines Aufguss- oder Extraktionsprodukts, das durch die offene Öffnung (3d) der einzelnen Folie (3) zugeführt wird;
- eine erste Station (13) zum Verschließen der Öffnung (3d) der einzelnen Folie (3), die aus dem Greifer (10) hervorsteht, mittels einer quer verlaufenden Siegellinie (L) ;
- eine Station (14) zum Abschneiden einer Kante (3e) überschüssigen Materials zwischen der quer verlaufenden Siegellinie (L) und dem freien Ende der Folie (3) oder des Beutels (1), die bzw. der auf diese Weise gebildet wurde, unter Nutzung eines Schneidelements (15), das radial relativ zur zweiten Rotationsachse (9X) des zweiten Karussells (9) positioniert ist,
und **dadurch gekennzeichnet, dass** das Schneidelement (15) Folgendes umfasst:
- einen Tragekörper (16) für eine(n) erste(n) Kontaktkopf oder Matrize (17) und einen zweiten Schneidkopf oder Stempel (18), der der Matrize (17) zugewandt ist;
- einen Aktuator (19), der zwischen der Matrize (17) und dem Stempel (18) und dem Tragekörper (16) eingesetzt und ausgelegt ist, um die Matrize (17) und den Stempel (18) relativ zum Tragekörper (16) entlang einer geradlinigen und radialen Bahn relativ zur zweiten Rotationsachse (9X) in beide Richtungen zwischen einer ersten eingefahrenen Nichtbetriebsposition, in der die Matrize (17) und der Stempel (18) wegführend von der Kante (3e) überschüssigen Materials des an der Schneidstation (14) positionierten Beutels (1) bewegt wird, und einer zweiten vorgeschobenen Betriebsposition, in der die Matrize (17) und der Stempel (18) einander angenähert werden und die Kante (3e) überschüssigen Materials des Beutels (1) abfangen, sodass die Kante (1) überschüssigen Materials getrennt wird, zu bewegen;
- eine kinematische Einheit (20), die mit der Matrize (17) oder dem Stempel (18) verbunden und ausgelegt ist, um diese zwischen einer ersten offenen Nichtbetriebsposition, in der die Matrize (17) und der Stempel (18) zumindest an der ersten eingefahrenen Nichtbetriebsposition des Aktuators (19) beabstandet sind, und einer zweiten geschlossenen Betriebsposition, in der die Matrize (17) und der Stempel (18) zumindest an der zweiten vorgeschobenen Betriebsposition des Aktuators (19) in Kontakt miteinander sind, wobei die abzuschneidende überschüssige Kante (3e) dazwischen eingesetzt ist.

2. Maschine nach Anspruch 1, wobei die kinematische Einheit (20) mit einer Einheit (21) zur Bewegungsübertragung ausgestattet ist, die mit dem Tragekörper (16) verbunden ist, sodass die Bewegung der Matrize (17) oder des Stempels (18) zwischen der ersten offenen Nichtbetriebsposition und der zweiten geschlossenen Betriebsposition und umgekehrt bei der Aktivierung des Aktuators (19) zwischen der ersten eingefahrenen Betriebsposition und der zweiten vorgeschobenen Betriebsposition und umgekehrt koordiniert wird.

3. Maschine nach Anspruch 1 oder 2, wobei die Matrize (17) an einer steifen Halterung (22) fixiert ist und der Stempel (18) mit der kinematischen Einheit (20) verbunden und hinführend und wegführend von der Matrize (17) bewegbar ist.

4. Maschine nach einem der vorhergehenden Ansprüche, wobei die Matrize (17) und/oder der Stempel (18) mit einer Saugeinheit (23) verbunden sind, um die abgeschnittene überschüssige Kante (3e) zu halten, wobei die Saugeinheit (23) in der Lage ist, zumindest beim Übergang des Aktuators (19) zwischen seiner ersten Nichtbetriebsposition und seiner zweiten Betriebsposition aktiviert zu werden.

5. Maschine nach Anspruch 4, wobei die Matrize (17) einen offenen Innenbereich aufweist, der mit der Saugeinheit (23) verbunden ist, um die abgeschnittene überschüssige Kante (3e) aufzusammeln.

6. Maschine nach Anspruch 4 oder 5, wobei die Saugeinheit (23) eine fixe Halterung (22) umfasst, mit der die Matrize (17) assoziiert ist, und in der ein Saugkanal (23c) ausgebildet ist, der sich vom offenen Innenbereich der Matrize (17) erstreckt, wobei die Halterung (22) eine untere Verschiebebasis (22s) umfasst, die entlang einer Wand (24) verschiebbar ist, bildend einen Teil eines kastenförmigen Sammlers (25) zum Aufnehmen und Abladen der abgeschnittenen überschüssigen Kante (3e) zu einem Sammelpunkt.

7. Maschine nach einem der vorhergehenden Ansprüche, wobei die Matrize (17) und der Stempel (18) auch ausgelegt sind, um eine Materialklappe auf einer Seite (3a oder 3b) des Beutels (1) zu entfernen, sodass eine verdünnte Zone (ZI) des Beutels (1) definiert wird, um eine Öffnung vom Aufreißtyp zu erlauben.

8. Maschine nach einem der vorhergehenden Ansprüche, umfassend eine zweite Verschließstation (26), die zwischen der ersten Verschließstation (13) und der Schneidstation (14) eingesetzt ist.

9. Maschine nach Anspruch 8, wobei die erste Verschließstation (13) eine Ultraschallsiegeleinheit (13a) umfasst, um die quer verlaufende Verschließlinie (L) der einzelnen Folie (3) zu bilden, und wobei die zweite Verschließstation (26) eine thermische Heißsiegeleinheit (26a) umfasst, um einen quer verlaufenden Siegelstreifen (S) zu bilden, der die quer verlaufende Verschließlinie (L) der einzelnen Folie (3) überlagert.

10. Maschine nach einem der Ansprüche 2 bis 9, wobei die Bewegungsübertragungseinheit (21) einen Verbindungsstangenkurbelmechanismus umfasst, wobei die Kurbel (21a) mit einer Welle (27) assoziiert ist, die frei um ihre Achse (27X) drehbar und an einer Säule (28) befestigt ist, die einen Teil des Tragekörpers (16) bildet, wobei die Verbindungsstange (21b) an der Kurbel (21a) an einem relativen ersten Ende und einem L-förmigen Hebel (29) angelenkt ist, definierend die kinematische Einheit (20) zum Bewegen des Stempels (18) zwischen der ersten offenen Nichtbetriebsposition und der zweiten geschlossenen Betriebsposition durch eine geradlinige Bahn hinführend zur und wegführend von der Matrize (17).

11. Maschine nach einem der vorhergehenden Ansprüche, wobei der Stempel (18) mit einer Einheit (30) zum Erzeugen eines Luftstroms verbunden ist, der durch eine Vielzahl von Durchführungslöchern strömt, die auf dem Stempel (18) ausgebildet sind, um das Halten der abgeschnittenen überschüssigen Kante (3e) durch das Drücken der abgeschnittenen überschüssigen Kante (3e) auf die Matrize (17) zu erlauben.

## Revendications

1. Machine pour former des sachets (1) contenant des produits à infuser ou à extraire, comprenant au moins :
- un poste (2) pour former et alimenter des feuilles individuelles (3) de matériau d'emballage ;
- un poste (4) pour plier en « U » la feuille individuelle (3), comprenant un dispositif de pliage (5) et un premier carrousel (6), tournant autour d'un premier axe (6X) de rotation, équipé d'une pluralité de préhenseurs radiaux (7) configurés chacun pour recevoir une feuille individuelle (3) correspondante ;
- une unité (8) pour sceller deux bords latéraux (3a, 3b) de la feuille individuelle (3), positionnée dans le préhenseur correspondant (7), de manière à former une feuille (3) avec un fond fermé (3c) pour le pliage et les deux côtés fermés (3a, 3b) pour le scellage ;
**caractérisée en ce que** la machine comprend de plus :
- un deuxième carrousel (9), tournant autour d'un deuxième axe (9X) de rotation, équipé d'une pluralité de préhenseurs radiaux (10) configurés chacun pour recevoir la feuille individuelle (3) ; la feuille individuelle (3) étant positionnée sur le préhenseur correspondant (10) avec une extrémité relative ou ouverture (3d) ouverte vers l'extérieur du préhenseur (10) ; le deuxième carrousel (9) tournant autour du deuxième axe (9X) pour définir une trajectoire circulaire (P) pour chaque préhenseur (10) afin de permettre l'atteinte d'une série supplémentaire de postes en succession et selon une direction d'alimentation (A) :
- un poste de dosage (11), comprenant au moins un dispositif (12) pour doser un produit à infuser ou à extraire alimenté par l'ouverture ouverte (3d) de la feuille individuelle (3) ;
- un premier poste (13) pour fermer l'ouverture (3d) de la feuille individuelle (3) dépassant du préhenseur (10), au moyen d'une ligne de scellage transversale (L) ;
- un poste (14) pour couper un bord (3e) de matériau en excès présent entre la ligne de scellage transversale (L) et l'extrémité libre de la feuille (3) ou sachet (1) ainsi formé, à l'aide d'un élément de coupe (15) positionné radialement par rapport au deuxième axe (9X) de rotation du deuxième carrousel (9) ;
et **caractérisée en ce que** l'élément de coupe (15) comprend :
- un corps de support (16) pour une première tête de contact ou matrice (17) et une deuxième tête de coupe ou poinçon (18) positionnée en face de la matrice (17) ;
- un actionneur (19) interposé entre la matrice (17) et le poinçon (18) et le corps de support (16) et configuré pour déplacer la matrice (17) et le poinçon (18), par rapport au corps de support (16), le long d'une trajectoire rectiligne et radiale par rapport au deuxième axe (9X) de rotation, dans les deux sens, entre une première position retirée de non fonctionnement, dans laquelle la matrice (17) et le poinçon (18) sont éloignés du bord (3e) de matériau en excès du sachet (1) positionné en correspondance du poste de coupe (14), et une deuxième position avancée de fonctionnement, dans laquelle la matrice (17) et le poinçon (18) sont rapprochés l'un de l'autre et interceptent le bord (3e) du matériau en excès du sachet (1), de manière à séparer le bord (1) de matériau en excès ;
- une unité cinématique (20) reliée à la matrice (17) ou au poinçon (18) et configurée pour les déplacer entre une première position ouverte de non fonctionnement, dans laquelle la matrice (17) et le poinçon (18) sont espacés, au moins en correspondance de la première position retirée de non fonctionnement de l'actionneur (19), et une deuxième position fermée de fonctionnement, dans laquelle la matrice (17) et le poinçon (18) sont en contact l'un avec l'autre, avec interposition du bord en excès (3e) à découper, au moins en correspondance de la deuxième position avancée de fonctionnement de l'actionneur (19).

2. Machine selon la revendication 1, dans laquelle l'unité cinématique (20) est équipée d'une unité (21) de transmission de mouvement reliée au corps de support (16) de manière à coordonner le mouvement de la matrice (17) ou du poinçon (18) entre la première position ouverte de non fonctionnement et la deuxième position fermée de fonctionnement, et vice versa, à l'activation de l'actionneur (19) entre la première position retirée de non fonctionnement et la deuxième position avancée de fonctionnement, et vice versa.

3. Machine selon la revendication 1 ou 2, dans laquelle la matrice (17) est fixée à un support rigide (22) et le poinçon (18) est relié à l'unité cinématique (20) et peut se rapprocher et s'éloigner de la matrice (17).

4. Machine selon l'une quelconque des revendications précédentes, dans laquelle la matrice (17) et/ou le poinçon (18) sont reliés à une unité d'aspiration (23) pour retenir le bord en excès coupé (3e) ; l'unité d'aspiration (23) pouvant être activée au moins au passage de l'actionneur (19) entre sa première position de non fonctionnement et sa deuxième position de fonctionnement.

5. Machine selon la revendication 4, dans laquelle la matrice (17) comporte une zone intérieure ouverte reliée à l'unité d'aspiration (23) pour recueillir le bord en excès coupé (3e).

6. Machine selon la revendication 4 ou 5, dans laquelle l'unité d'aspiration (23) comprend un support fixe (22) auquel la matrice (17) est associée et dans lequel se trouve un canal d'aspiration (23c) se prolongeant à partir de la zone intérieure ouverte de la matrice (17) ; le support (22) comprend une base inférieure coulissante (22s) pouvant coulisser le long d'une paroi (24) faisant partie d'un collecteur en forme de boîte (25) pour saisir et décharger le bord en excès coupé (3e) vers un point de collecte.

7. Machine selon l'une quelconque des revendications précédentes, dans laquelle la matrice (17) et le poinçon (18) sont également configurés pour retirer un rabat de matériau sur un côté (3a ou 3b) du sachet (1) de manière à définir une zone affaiblie (ZI) du sachet (1) pour permettre une ouverture de type déchirure.

8. Machine selon l'une quelconque des revendications précédentes, comprenant un deuxième poste de fermeture (26) interposé entre le premier poste de fermeture (13) et le poste de coupe (14).

9. Machine selon la revendication 8, dans laquelle le premier poste de fermeture (13) comprend une unité de scellage par ultrasons (13a) pour former la ligne de fermeture transversale (L) de la feuille individuelle (3) et dans laquelle le deuxième poste de fermeture (26) comprend une unité de scellage thermique à chaud (26a) pour former une bande de scellage transversale (S) superposée à la ligne de fermeture transversale (L) de la feuille individuelle (3).

10. Machine selon l'une quelconque des revendications 2 à 9, dans laquelle l'unité de transmission de mouvement (21) comprend un mécanisme bielle-manivelle ; la manivelle (21a) étant associée à un arbre (27), librement rotatif autour de son axe (27X), et solidaire d'une colonne (28) faisant partie du corps de support (16) ; la bielle (21b) étant montée articulée à la manivelle (21a), à une première extrémité relative, et à un levier en forme de « L » (29) définissant l'unité cinématique (20) pour déplacer le poinçon (18) entre la première position ouverte de non fonctionnement et la deuxième position fermée de fonctionnement selon une trajectoire rectiligne vers et en s'éloignant de la matrice (17).

11. Machine selon l'une quelconque des revendications précédentes, dans laquelle le poinçon (18) est relié à une unité (30) pour générer un flux d'air passant à travers une pluralité de trous passants réalisés sur le poinçon (18) pour permettre la retenue du bord en excès de coupe (3e) par la poussée du bord en excès de coupe (3e) sur la matrice (17).
